(19) Europäisches Patentamt

European Patent Office

Office européen des brevets

(11) EP 1 727 225 A1

(12) EUROPEAN PATENT APPLICATION
published in accordance with Art. 158(3) EPC

(43) Date of publication:
29.11.2006 Bulletin 2006/48

(51) Int Cl.:
$H01M\ 8/02$ (2006.01)    $D04H\ 1/42$ (2006.01)
$D04H\ 1/64$ (2006.01)    $D06M\ 13/513$ (2006.01)
$H01M\ 8/10$ (2006.01)

(21) Application number: 05719953.1

(22) Date of filing: 03.03.2005

(86) International application number:
PCT/JP2005/003649

(87) International publication number:
WO 2005/086265 (15.09.2005 Gazette 2005/37)

(84) Designated Contracting States:
DE FR GB

(30) Priority: 04.03.2004 JP 2004060808
31.03.2004 JP 2004102787

(71) Applicant: Nippon Sheet Glass Company, Limited
Tokyo 105-8552 (JP)

(72) Inventors:
• ASADA, Atsushi,
c/o NIPPON SHEET GLASS COMPANY LTD
Tokyo 1058552 (JP)

• INO, Juichi,
c/o NIPPON SHEET GLASS COMPANY LTD
Tokyo 1058552 (JP)
• SATO, Noriaki,
c/o NIPPON SHEET GLASS COMPANY LTD
Tokyo 1058552 (JP)

(74) Representative: Hart Davis, Jason et al
Cabinet Beau de Loménie,
158, rue de l'Université
75340 Paris Cedex 07 (FR)

(54) REINFORCING MATERIAL FOR PROTON CONDUCTIVE MEMBRANE, PROTON CONDUCTIVE MEMBRANE USING SAME AND FUEL CELL

(57) A reinforcing material for proton conductive membrane, comprising a nonwoven fabric including, as essential components thereof, glass fibers having a C-glass composition and a binder for strengthening bonding between the glass fibers. The average fiber diameter of the glass fibers is in a range of $0.1\mu m$ to $20\mu m$, and the average fiber length of the glass fibers is in a range of 0.5 mm to 20 mm. According to the present invention, a reinforcing material excellent in heat resistance, acid resistance, and dimensional stability can be obtained.

1

Fig. 3

EP 1 727 225 A1

**Description**

Technical Field

The present invention relates to a reinforcing material for a proton conductive membrane used as the electrolyte membrane of a fuel cell. Furthermore, the present invention relates to a proton conductive membrane using the reinforcing material, and a fuel cell.

Background Art

Because of high power generation efficiency and small adverse impact on the environment, fuel cells have gained attention as a better energy source for the environment. Generally, the fuel cells are classified into various types depending on the kind of electrolytes. In particular, polymer electrolyte fuel cells (PEFC) are high-power and easily can be reduced in size and weight. In addition, it is possible to expect a low cost performance derived from the volume efficiency. Because of these advantages, the polymer electrolyte fuel cell is useful for various power sources for a small-sized onsite type, an automobile, and a portable power source, and the like.

At present, as proton conductive polymer membranes, a fluoropolymer membrane whose principal frame is perfluoroalkylene and has an ion-exchange group such as a sulfonic acid group, a carboxylic acid group, and the like is primarily used.

In these polymer membranes, the inclusion of water results in ionization of the sulfonic acid in the polymer so that the polymer membrane becomes hydrophilic. In addition, ionized molecules gather to form a cluster, and this cluster forms a passage of protons. However, this polymer membrane swells on exposure to water, thereby causing the increase in dimension, the deterioration of a mechanical strength, and the generation of a creep upon prolonged operation. As a result, the ease of handling upon assembly of the fuel cell deteriorates, and durability deteriorates after the operation has started.

To solve these problems, the reinforcement of the polymer membrane by various reinforcing materials has been attempted. For example, JP 2001-345111A discloses a method in which a reinforcing material made of a fibrillar fluorocarbon polymer is mixed and dispersed in a proton exchange membrane made of a perfluorocarbon polymer having a sulfonic acid group.

Furthermore, JP 2003-142122A discloses a method in which a solid polymer electrolyte is impregnated with drawn porous polytetrafluoroethylene in order to manufacture a membrane that is not destroyed even when being thinned with a heat press.

In addition, JP 11(1999)-204121A discloses a method in which a fluoropolymer is reinforced by an inorganic fiber whose surface is treated with a silane coupling agent, and a hydrocarbon polymer is graft-polymerized to the fluoropolymer, which is followed by introduction of a sulfonic acid group to the resultant polymer.

In addition, JP 2001-307545A discloses a method in which a composite membrane formed of an organic polymer such as poly(ethylene oxide), and a three-dimensional cross-linked structure of an oxide of metals such as silicon, titanium, and zirconium is reinforced by a reinforcing material such as a woven fabric. As the reinforcing material, disclosed are a fiber of polymer materials such as acryl, polyester, polypropylene, and a fluororesin; a fiber of natural materials such as silk, cotton, and paper; and a glass fiber. JP 2001-307545A mentions that the glass fiber and a textile made thereof, in particular, preferably are used from a viewpoint of strength and affinity with a membrane composition.

Furthermore, JP 10(1998)-312815A discloses a composite membrane in which an ion-conductive polymer is embedded into a porous support formed of randomly orientated fibers. The porous support is used for improving the dimensional stability and the ease of handling of the composite membrane. JP 10(1998)-312815A lists fibers of glass, polymer, ceramic, quartz, silica, carbon, or metal as suitable fibers, and mentions that fibers of glass, ceramic, or quartz are preferable.

However, the fibrillar fluorocarbon polymer in JP 2001-345111A and the drawn porous polytetrafluoroethylene in JP 2003-142122A are very expensive compared to a generally available porous body such as a nonwoven fabric of the glass fiber and a woven fabric of the glass fiber. In addition, polyolefin porous bodies such as a polypropylene nonwoven fabric and a polyethylene porous film, which are known as inexpensive and high-strength porous bodies, are not sufficient in terms of heat resistance and acid resistance required for the proton conductive membrane for a fuel cell.

In the electrolyte membrane disclosed in JP 11(1999)-204121A, acicular fibers and fluoropolymers embedded in the electrolyte membrane are bonded by a silane coupling agent so that the tensile strength of the electrolyte membrane is improved. Therefore, in the electrolyte membrane disclosed in JP 11(1999)-204121A, reinforcing fibers themselves do not form a three-dimensional structure. In fact, the length of an inorganic fiber used in the embodiment of JP 11(1999)-204121A is as short as approximately 20 $\mu$m (0.6 $\mu$m in fiber diameter, an aspect ratio of 33).

Furthermore, in the embodiment of JP 2001-307545A, powdered glass fibers of 70 $\mu$m in length and 10 $\mu$m in fiber diameter are mixed in the electrolyte membrane. The reinforcement by mixing and distributing such short fiber as reinforcing fibers can improve the tensile strength to some degree. However, the effect of preventing a dimensional change that occurs due to swelling caused by hydration of the polymer membrane and due to contraction upon drying and curing is not satisfactory.

JP 10(1998)-312815A discloses an example including, as a reinforcing material, a commercially-available glass fiber nonwoven fabric or a wet-making sheet containing cut glass fibers and glass micro fibers. JP 10(1998)-312815A also discloses an example including, as a reinforcing material, a quartz fiber sheet.

The inner portion of the proton conductive membrane of the fuel cell is an acid environment, so that the reinforcing material therefor requires high acid resistance. Therefore, a generally used glass composition such as an E-glass composition, which is often used as a glass fiber, is inferior in acid resistivity and hence not suitable. In the E-glass composition, an alkali component leaches from inside the glass fiber after a long operation.

Furthermore, the proton conductive membrane used for the fuel cell requires a small dimensional change upon swelling, as well as high tensile strength.

Disclosure of Invention

Therefore, an object of the present invention is to provide a reinforcing material that is used for a proton conductive membrane of a fuel cell and is excellent in heat resistance, acid resistance, and dimensional stability. Furthermore, another object of the present invention is to provide a proton conductive membrane using the reinforcing material, and a fuel cell.

A reinforcing material of the present invention is a reinforcing material for proton conductive membrane, and comprises a nonwoven fabric including, as essential components thereof, glass fibers having a C-glass composition and a binder for strengthening bonding between the glass fibers, wherein an average fiber diameter of the glass fibers is in a range of 0.1 $\mu$m to 20 $\mu$m, and an average fiber length of the glass fibers is in a range of 0.5 mm to 20 mm. The "essential components" means the total of the content of the glass fibers having the C-glass composition and the content of the binder is 90 wt.% or more.

The proton conductive membrane of the present invention is a proton conductive membrane including a proton conductive substance and a reinforcing material, wherein the reinforcing material is a reinforcing material of the present invention.

The fuel cell of the present invention is a fuel cell including a proton conductive membrane, wherein the proton conductive membrane includes a proton conductive substance and a reinforcing material, and the reinforcing material is the reinforcing material of the present invention.

Since the skeleton of a reinforcing material of the present invention is formed of a binder and glass fibers having a C-glass composition, the reinforcing material has high heat resistance and acid resistance, and can maintain the strength sufficiently even under an acid environment at a high temperature. In addition, in the reinforcing material of the present invention, since glass fibers are bound by the binder each other, excellent dimensional stability and tensile strength are offered. Furthermore, the reinforcing material of the present invention can be manufactured at a low cost.

The use of the reinforcing material of the present invention obtains a proton conductive membrane that is excellent in mechanical strength, dimensional stability, ease of handling and durability, and offers good proton conductivity. Furthermore, the configuration of a fuel cell by using this proton conductive membrane obtains a fuel cell with a high power generation efficiency.

Brief Description of Drawings

Fig. 1 is an electron microscope photograph showing one example of a reinforcing material of the present invention;
Fig. 2 is an electron microscope photograph showing another example of a reinforcing material of the present invention; and
Fig. 3 is a cross sectional view schematically showing the structure of a proton conductive membrane of the present invention.

Description of the Preferred Embodiments

Hereinafter, embodiments of the present invention will be described.

Reinforcing Material

A reinforcing material of the present invention is a reinforcing material for proton conductive membrane. The reinforcing material comprises a nonwoven fabric including, as essential components thereof, glass fiber having a C-glass composition and a binder for strengthening the bonding between the glass fibers. In the nonwoven fabric, the total of the content of the glass fibers having a C-glass composition and that of the binder is 90 wt.% or more (95 wt.% or more, for example), and typically 99 wt.% or more (100 wt.%, for example). In the nonwoven fabric, the bonding between the glass fibers is strengthened by the binder. The average fabric diameter of the glass fibers is in a range of 0.1 $\mu$m to 20 $\mu$m. The average fiber length of the glass fibers is in a range of 0.5 mm to 20 mm. The use of the nonwoven fabric essentially configured of the glass fibers having a C-glass composition and the binder for strengthening the bonding between the glass fibers as a reinforcing material provides a proton conductive membrane of a high property.

The C-glass fiber (glass fiber having a C-glass composition) is a fiber used in a lead battery, and the like. The C-glass composition has the highest acid resistance of all the well known compositions for a glass fiber. A generally used C-glass composition, which can be applied to the present invention, is shown in Table 1.

Table 1

| Component | Content (wt.%) |
| --- | --- |
| $SiO_2$ | 63 to 72 |
| $Al_2O_3$ | 1 to 7 |
| CaO | 4 to 11 |
| MgO | 0 to 5 |
| $B_2O_3$ | 0 to 8 |
| $R_2O$ | 9 to 19 |
| $Fe_2O_3$ | 0 to 0.2 |
| $Li_2O$ | 0 to 1 |
| ZnO | 0 to 6 |
| $F_2$ | 0 to 1 |

It is noted that in Table 1, $R_2O$ represents the total of $Na_2O$ and $K_2O$, where $0 \leq [Na_2O] \leq 19$ (wt.%), $0 \leq [K_2O] \leq 19$ (wt.%), $9 \leq [Na_2O]+[K_2O] \leq 19$ (wt.%). In addition, the C-glass composition in Table 1 can include minute amounts of components not shown in Table 1.

For securing a function as the electrolyte membrane of a fuel cell using a solid polymer, the thickness of the nonwoven fabric (reinforcing material), which serves as the skeleton of the electrolyte membrane, is preferably 400 $\mu$m or less, and more preferably 100 $\mu$m or less. For example, 50 $\mu$m or less. The "thickness of the nonwoven fabric" in this specification means the thickness (measured by a dial gauge) of the nonwoven fabric pressed with the pressure of 20 kPa.

The average fiber diameter of the glass fibers configuring the nonwoven fabric needs to be in a range of 0.1 $\mu$m to 20 $\mu$m, and preferably is in a range of 0.3 $\mu$m to 8 $\mu$m. When the average fiber diameter is less than 0.1 $\mu$m, the manufacturing cost increases drastically. On the other hand, when the average fiber diameter exceeds 20 $\mu$m, it becomes difficult to form a nonwoven fabric uniform in thickness. Furthermore, a plurality of kinds of glass fibers different in diameter can be mixed and used.

The average fiber length of the glass fibers configuring the nonwoven fabric needs to be in a range of 0.5 mm to 20 mm, and preferably is in a range of 2 mm to 15 mm. When the average fiber length is less than 0.5 mm, the mechanical strength of the nonwoven fabric drastically deteriorates, so that the reinforcing effect of the electrolyte membrane deteriorates, thereby drastically worsening ease of handling. On the other hand, when the average fiber length exceeds 20 mm, the dispersibility of the glass fiber upon formation of the nonwoven fabric deteriorates, thereby deteriorating uniformity of the thickness, and uniformity of area density. As a result, a nonwoven fabric suitable for reinforcing the electrolyte membrane cannot be obtained.

When a nonwoven fabric is formed solely of the C-glass fiber, the dimensional stability and the tensile strength of the nonwoven fabric depend solely upon the entanglement of the fibers. Because of this, the bonding between the fibers is week, and thus, with the deformation of the electrolyte (proton conductive polymer), the glass fibers adhering to the electrolyte are moved. In particular, a thin C-glass fiber having a diameter of 20 $\mu$m or less, which is difficult to be lengthen, is short in fiber length and weak in binding force between the glass fibers. Due to this reason, when the nonwoven fabric is configured solely of the C-glass fiber, the dimensional stability required for the proton conductive membrane of the fuel cell cannot be obtained. In the reinforcing material of the present invention, the glass fibers are bound by a binder so that the dimensional stability and the strength of the nonwoven fabric are improved.

The binder may include an inorganic binder. The fixing of intersections of the glass fibers by the inorganic binder forms a three-dimensional structure of high dimensional stability.

The amount of the inorganic binder to be added may be in a range of 0.5% to 10% (more preferably 2% to 9%) of the weight of the glass fiber. This range provides a reinforcing material excellent in a mechanical property without drastically decreasing the proton conductivity. As the inorganic binder, silica (silicon dioxide) can be used, for example, and other inorganic materials can also be used. In addition, the binder can include an organic binder. These inorganic and organic binders can be formed of a binder liquid described later.

The binder may include a binder formed by using a liquid including a binder component. Hereafter, the liquid including a binder component may be referred to as a "binder liquid".

The binder liquid is not particularly limited as long as a binder of high heat resistance and acid resistance can be obtained after being cured. As the binder liquid, an acrylic resin dispersion, an acrylic resin emulsion, a fluororesin dispersion, a fluororesin emulsion, a silicone resin dispersion, a silicone resin emulsion, a polyimide varnish, a polyvinyl alcohol solution, a colloidal silica dispersion, an alkyl silicate solution, a solution of silicon or titanium alkoxide, a titania sol, and the like, can be listed. As a solvent or a dispersion medium therefor, water, various kinds of alcohols, or a mixture thereof, for example, can be used. The binder liquid may include dispersant, surfactant, pH adjuster, flocculant, and the like.

When the binder liquid is used, a preferable amount of the binder to be added (solid component weight of the binder liquid) is such that the amount of the binder to be deposited is in a range of 0.5% to 10% (more preferably 2% to 9%) of the weight of the glass fiber. When the amount of the binder to be deposited is less than 0.5% of the weight of the glass fiber, an adhesion effect of the glass fibers by the binder becomes low. On the other hand, when the amount of the binder to be deposited exceeds 10% of the weight of the glass fiber, a multiplicity of films are formed among the glass fibers, which may inhibit proton conduction. As the binder liquid, the use of colloidal silica excellent in acid resistance and heat resistance is particularly preferable.

In addition, the binder may include a fibrous binder. In this case, the amount of the fibrous binder to be added preferably is in a range of 1% to 40% (more preferably 2% to 30%) of the weight of the glass fiber. When the amount to be added is less than 1% of the weight of the glass fiber, the effect of adhesion or entanglement of the glass fibers, which is caused by the binder, becomes low. On the other hand, when the amount to be added exceeds 40% of the weight of the glass fiber, the dispersion of the glass fiber becomes insufficient, and films are formed among the glass fibers. As a result, it may be difficult to permeate the proton conductive polymer among the glass fibers sufficiently.

For the fibrous binder, a fibrous substance providing a physical and/or chemical binding force between the fibrous binder and the glass fiber and/or among the fibrous binders is used. In addition, the fibrous binder preferably is made of a material with high heat resistance and high acid resistance. As such fibrous binder, beaten cellulose, an acrylic fiber, a fluororesin fiber, an aramid fiber, a polyester fiber, a polyolefin fiber, and the like, can be listed. In particular, the beaten cellulose and the polyester fiber have the advantage of satisfying both of high heat resistance and high adhesiveness.

When a nonwoven fabric of 50 μm or less in thickness is formed by using a fibrous binder of above 20 μm in diameter, a local convex portion is formed in the nonwoven fabric, and thus, it may be difficult to form a nonwoven fabric uniform in thickness. To avoid this problem, the diameter of the fibrous binder is preferably 20 μm or less. However, when the fibrous binder is deformed or melted during the manufacturing steps of the nonwoven fabric so that no convex portion is formed in the nonwoven fabric, the diameter may exceed 20 μm.

A preferable length of the fibrous binder varies depending upon the material, the diameter, the shape, and the hydrophilic property of the fibrous binder. The length of one example of the fibrous binder may be in a range of 0.2 mm to 20 mm.

It is noted that the inorganic binder, the organic binder, the binder formed of the binder liquid, and the fibrous binder described above may be used independently, or a plurality of kinds of binders may be used together.

The nonwoven fabric of the present invention used as the reinforcing material is preferably uniform in area density and thickness.

Furthermore, when the thickness of the nonwoven fabric is set to the above-described thickness, the area density (weight per unit area) of the nonwoven fabric preferably is in a range of 2 to 50 $g/m^2$, and more preferably in a range of 3 to 25 $g/m^2$. When the area density is less than 2 $g/m^2$, the entanglement of the glass fibers becomes small, and thus, the tensile strength deteriorates. On the other hand, when the area density exceeds 50 $g/m^2$, this reinforcing material is too thick to serve as a reinforcing material for an electrolyte membrane. If the density is enhanced by pressing, for example, for thinning the reinforcing material, the glass fiber is broken at the intersection so that the glass fiber becomes short, which may drastically deteriorate the tensile strength.

In addition, the porosity of the nonwoven fabric preferably is in a range of 60 to 98 vol.%. When the porosity exceeds 98 vol.%, the strength deteriorates. In addition, the rigidity also deteriorates, and the function of preventing the deformation caused by the contraction of the electrolyte membrane deteriorates. On the other hand, when the porosity is less than 60 vol.%, the proton conductivity of the electrolyte membrane deteriorates. The porosity preferably is in a range of 80 to 98 vol.%, and more preferably in a range of 90 to 95 vol.%. In one example of a wet papermaking using a short glass fiber of 0.7 $\mu$m in average diameter and approximately 4 mm in average length without a mechanical compression step, a nonwoven fabric of 30 $\mu$m in thickness and approximately 95 vol.% in porosity can be prepared.

It is noted that the value of a porosity V (vol.%) can be evaluated with the following [Eq.1], where "t" is a thickness (m) of the nonwoven fabric, W is a weight per unit area ($kg/m^2$) of the nonwoven fabric, $\rho G$ is a density (approximately $2.5 \times 10^3$ $kg/m^3$) of the glass fiber, $\rho B$ is a true density ($kg/m^3$) of the binder material, and cB is a weight ratio of the binder to the glass fiber. Furthermore, the thickness "t" of the nonwoven fabric is the thickness (measured by a dial gauge) of the nonwoven fabric pressurized by 20 kPa. The true density $\rho B$ is a density measured excluding a void of nonwoven fabric, that is, a density measured when a volume occupied only by the substance itself is assumed to be a volume used for calculating the density.

$$[\text{Eq. 1}]$$
$$V\ (\%) = [1 - W/t \times \{(1-cB)/\rho G + cB/\rho B\}] \times 100$$

Furthermore, a surface treatment may be applied to the reinforcing material of the present invention. For example, the surface of the nonwoven fabric may be treated with a silane coupling agent. The treatment of the silane coupling agent with the reinforcing material of the present invention further can enhance the reinforcing effect.

Furthermore, it is possible to apply a surface treatment in which a coating such as silica is formed in the glass fiber. A method of the surface treatment is not particularly limited as long as the heat resistance and the acid resistance of the glass fiber are not damaged.

When the electrolyte membrane is reinforced by using the nonwoven fabric, a minute separation is formed in the interface between the glass fiber and the proton conductive polymer due to a difference in thermal expansibility of the both and due to a stress generated upon formation of the polymer membrane. In the vicinity of an area where the minute separation occurs, the effect of glass fiber preventing the deformation of the polymer decreases. As a result, the reinforcing effect of the nonwoven fabric may deteriorate.

As a means for preventing such deterioration of the reinforcing effect, and as a means for improving the reinforcing effect, a surface treatment of the glass fiber by the silane coupling agent is effective. Application of a silane coupling agent treatment in an appropriate condition onto the surface of the glass fiber improves the adhesiveness between the glass fiber and the proton conductive polymer, thereby restraining the formation of the above-described minute separation. As a result, the reinforcing effect by the glass fiber is highly enhanced.

The amount of the silane coupling agent to be deposited preferably is in a range of 0.5 mg to 200 mg per 1 $m^2$ of surface area of the glass fiber. When the amount to be deposited is less than 0.5 $mg/m^2$, the silane coupling agent can not cover the glass fiber surface sufficiently, and thus, the improvement of adhesiveness between the glass fiber and the polymer decreases. In addition, when the amount to be deposited exceeds 200 $mg/m^2$, a low strength layer formed solely of silane is formed between the glass fiber and the polymer, and thus, destruction easily occurs in the layer. As a result, the adhesiveness improvement effect between the glass fiber and the polymer decreases.

The silane coupling agent used for the reinforcing material of the present invention is not particularly limited as long as the agent improves the adhesiveness between the glass fiber and the proton conductive polymer. Because of easy handling, aminosilane or acrylsilane is preferable.

The above-described silane coupling agent treatment and the above-described binder addition offer the reinforcing effect by respectively independent mechanisms, and thus, the both can be used together. When used together, the effect is multiplied.

Manufacturing Method of Reinforcing Material

Hereinafter, methods for manufacturing a reinforcing material of the present invention will be described. The reinforcing material of the present invention can be prepared, for example, according to the following two methods.

In the first method, firstly, a mixed liquid including glass fibers having a C-glass composition and a component of a binder for strengthening the bonding between the glass fibers is prepared (step (i)). As the glass fiber, the above-described glass fiber is used. As the component of the binder, the binder liquid or fibrous binder described above is used. The mixed liquid of the step (i) may include dispersant, surfactant, pH adjuster, flocculant, and the like. Next, a nonwoven fabric including the glass fiber and the binder is formed from the mixed liquid (step (ii)). The nonwoven fabric can be formed by the generally used wet papermaking method, for example. After forming the nonwoven fabric, a thermal treatment, and the like, can be applied, as required. The completion of the step (ii) provides the nonwoven fabric in which the glass fibers are bound by the binder.

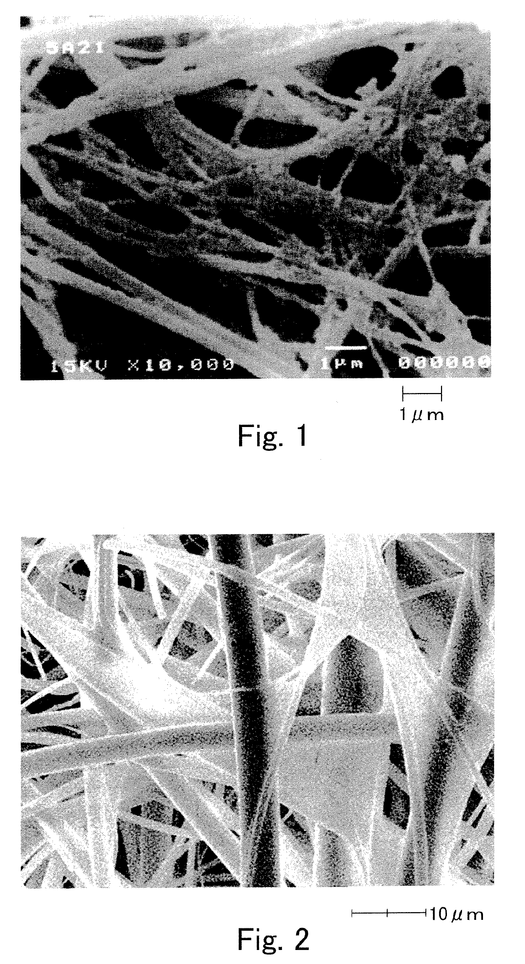

Fig. 1 shows one example of an electron microscope photograph of the reinforcing material formed by the first method with the mixed liquid including colloidal silica. As Fig. 1 shows, silica particles are deposited not only to the intersection of the glass fiber, but also on the surface of the glass fiber. Protrusions made of silica are formed on the surface of the glass fiber.

In the second method, firstly, a nonwoven fabric is formed by a glass fiber having a C-glass composition (step (I)). As the glass fiber, the above-described glass fiber is used. The nonwoven fabric can be formed by the generally used wet papermaking method.

Next, a liquid including the component of the binder is applied to the nonwoven fabric, which is followed by drying, so that the bonding between the glass fibers is strengthened by the binder (step (II)). As the liquid including the component of the binder, the above-described binder liquid is used. A thermal treatment can be applied after the drying, as required. The application of the binder liquid can be performed by immersion of the nonwoven fabric into the binder liquid, or performed by impregnation of the nonwoven fabric with the binder liquid. In the step (II), in order to restrain the generation of a film among the glass fibers, excess binder liquid preferably is removed after the application of the binder liquid.

Fig. 2 shows one example of an electron microscope photograph of a reinforcing material formed by using the second method in which the colloidal silica is used as the binder liquid. As Fig. 2 shows, silica is deposited at the intersection of the glass fiber, thereby forming the film at an intersecting portion.

The first method has advantages in that the manufacturing step is simple. On the other hand, the second method has advantages in that the binder can be concentrated in the intersection of the glass fiber, and thus, a high effectiveness is possible with a small amount of binder.

In addition, the surface treatment of the reinforcing material with the silane coupling agent can be performed after the above-described steps. The treatment with the silane coupling agent can be performed by the generally used method in which the silane coupling agent is used.

Proton conductive membrane

The proton conductive membrane of the present invention includes a proton conductive substance and a reinforcing material of the present invention. The proton conductive substance is not particularly limited, and a well known substance can be used. For example, polymer electrolytes such as a fluoropolymer electrolyte, a hydrocarbon polymer electrolyte, and a chemically-modified fullerene proton conductor can be used. In addition, an inorganic proton conductor or an inorganic-organic hybrid proton conductor can be used. For example, a silicate-based solid electrolyte such as a phosphosilicate solid electrolyte and the like can be used.

As the polymer electrolyte, a proton conductive polymer of which principal skeleton is perfluoroalkylene and having an ion-exchange group such as a sulfonic acid group or a carboxylic acid group, and the like, can be used. More specifically, Nafion (registered trademark) membrane (manufactured by DuPont), Dow membrane (manufactured by Dow Chemical), Aciplex (registered trademark) membrane (manufactured by Asahi Kasei Corporation), Flemion (registered trademark) membrane (manufactured by Asahi Glass, Co., Ltd.) and the like can be used.

The proton conductive membrane can be formed by impregnation of the nonwoven fabric of the present invention with a liquid in which a proton conductive substance such as a proton conductive polymer, and the like, is dispersed or melted, which is followed by drying. A thermal treatment may be performed after the drying.

The ratio of the reinforcing material of the present invention to the proton conductive membrane is preferably in a range of 1 to 50 wt.%.

Fuel Cell

The fuel cell of the present invention is a fuel cell including a proton conductive membrane, in which the proton conductive membrane includes a proton conductive substance and a reinforcing material of the present invention. That is, the proton conductive membrane is the above-described proton conductive membrane of the present invention. Portions other than the proton conductive membrane are not particularly limited, and the same configuration as that of a well known fuel cell can be applied. For example, the same configuration as that of the polymer electrolyte fuel cell can be applied. For example, on both sides of the proton conductive membrane of the present invention, a well known fuel electrode and a well known air electrode are arranged.

EXAMPLE

Hereinafter, by using examples and comparative examples, the present invention will be described more specifically. It is noted that the present invention is not limited to the following examples.

Example 1

A short glass fiber having a C-glass composition shown in Table 2 with 0.7 μm in average diameter and approximately 3 mm in average length was prepared. Both 95 parts by weight of the glass fiber and 5 parts by weight of a beaten cellulose fiber were simultaneously put into a pulper for untangling the fiber, and were dissociated and dispersed sufficiently in an aqueous solution adjusted to pH 2.5 by sulfuric acid. As a result, a slurry for paper-making was prepared.

[Table 2]

| Component | Content (wt.%) |
|---|---|
| $SiO_2$ | 65 |
| $Al_2O_3$ | 4 |
| CaO | 7 |
| MgO | 3 |
| $B_2O_3$ | 5 |
| $R_2O$ | 12 |
| $Li_2O$ | 0.5 |
| ZnO | 3.5 |

In Table 2, $R_2O$ represents the total of $Na_2O$ and $K_2O$, and $Na_2O$ is approximately 6 to 12 wt.% and $K_2O$ is approximately 0 to 6 wt.%.

Next, by using a wet type paper machine, a glass fiber nonwoven fabric of 50μ m in thickness and 8 g/m$^2$ in area density was prepared from the above-described slurry. The resultant nonwoven fabric contained the above-described two kinds of fibers in the above-described blending ratio. The porosity of the nonwoven fabric was approximately 95 vol.%. In this manner, the reinforcing material including the fibrous binder of the present invention was obtained.

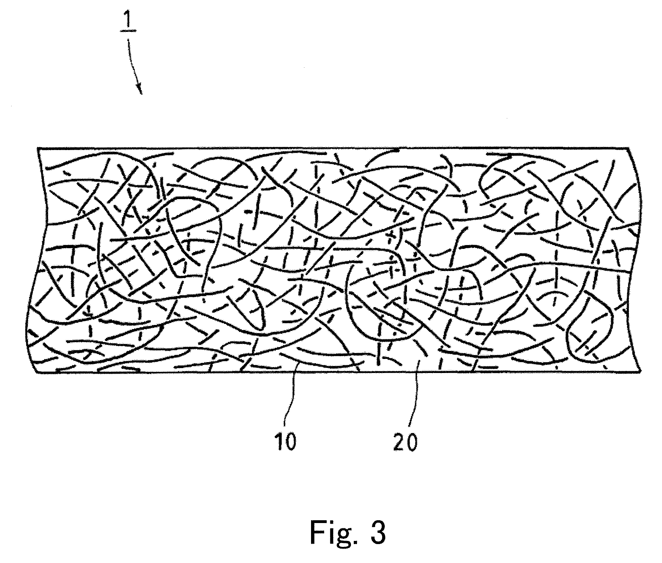

Next, this reinforcing material is impregnated with a dispersion liquid of a fluoropolymer electrolyte, and applied to a thermal treatment at 120°C for 1 hour after being naturally dried for 12 hours or longer. In this manner, the proton conductive membrane was prepared. The electrolyte dispersion liquid was prepared by diluting Nafion DE2020 (manufactured by DuPont) with isopropyl alcohol. The concentration and the impregnated amount of the electrolyte dispersion liquid were adjusted so that the thickness of the electrolyte membrane after the thermal treatment would be 50 μm. In this manner, the proton conductive membrane was obtained. The structure of this proton conductive membrane is shown schematically in Fig. 3.

As Fig. 3 shows, a proton conductive membrane 1 is formed of a reinforcing material (nonwoven fabric) 10 and a fluoropolymer electrolyte 20 impregnated in the reinforcing material 10.

Based on the density of the glass fiber and the electrolyte membrane, and the porosity of the nonwoven fabric, the glass fiber content in the proton conductive membrane was calculated at approximately 12 wt.%.

Example 2

The nonwoven fabric prepared in the example 1 was impregnated with a silane coupling agent, and subsequently, subjected to a thermal treatment in an oven at 120°C for one hour. Thereby, the reinforcing material of the present invention, including a fibrous binder therein and the surface being treated with the silane coupling agent, was obtained. As the silane coupling agent, an aqueous solution obtained by melting aminosilane into ion-exchanged water was used. At this time, the concentration and the impregnated amount of the aminosilane aqueous solution were adjusted so that a solid content of aminosilane to be deposited per 1 m$^2$ of the surface area of the glass fiber would be 10 mg. This reinforcing material was impregnated with the electrolyte dispersion liquid according to the same procedure as the example 1. Thereby, the proton conductive membrane was obtained.

Example 3

The nonwoven fabric prepared in the example 1 was impregnated with the binder liquid, and subsequently, dried in an oven at 100°C for 30 minutes. Thereby, the reinforcing material of the present invention including the inorganic binder (silica) and the fibrous binder was obtained. The binder liquid was prepared by diluting colloidal silica (manufactured by Nissan Chemical Industries, Ltd, Trade Name: Snowtechs O) with pure water. At this time, the concentration and the impregnated amount of the diluted colloidal silica were adjusted so that the amount of the deposited silica would be 5 wt.% of the glass fiber. This reinforcing material was impregnated with the electrolyte dispersion liquid according to the same procedure as the example 1. Thereby, the proton conductive membrane was obtained.

Example 4

The nonwoven fabric prepared in the example 3 was impregnated with a silane coupling agent, and subsequently, applied to a thermal treatment in an oven at 120˚C for one hour. Thereby, the reinforcing material of the present invention, including an inorganic binder and a fibrous binder, and the surface being treated with the silane coupling agent, was obtained. As the silane coupling agent, an aqueous solution obtained by dissolving aminosilane into ion-exchanged water was used. At this time, the concentration and the impregnated amount of the aminosilane aqueous solution were adjusted so that a solid content of the deposited aminosilane per 1 $m^2$ of the surface area of the glass fiber would be 10 mg. This reinforcing material was impregnated with the electrolyte dispersion liquid according to the same procedure as the example 1. Thereby, the proton conductive membrane was obtained.

Example 5

By using only the glass fiber used in the example 1, a nonwoven fabric formed solely of the glass fiber was formed by a paper-making step similar to the example 1. Using a similar method to the example 3, the colloidal silica treatment was applied to this nonwoven fabric. Thereby, the reinforcing material of the present invention including silica was obtained. This reinforcing material was impregnated with the electrolyte dispersion liquid using a similar procedure to the example 1. Thereby, the proton conductive membrane was obtained.

Comparative Example 1

The electrolyte dispersion liquid used in the example 1 was put into a glass-made petri dish having a bottom surface with good flatness. And the liquid was naturally dried for 12 hours or longer, and then was subjected to a thermal treatment at 120˚C for one hour. Thereby, the proton conductive membrane without the reinforcing material was obtained. The concentration of the electrolyte dispersion liquid was set to be the same as the example 1, and the volume of the liquid was adjusted so that the thickness of the electrolyte membrane after the thermal treatment would be 50 $\mu$m.

Comparative Example 2

By adding a pressure of approximately 100 MPa, the nonwoven fabric prepared in the example 1 was powdered. As a result, fine powders of the glass fiber were obtained. These fine powders were impregnated with a silane coupling agent, and subsequently, subjected to a thermal treatment in an oven at 120˚C for one hour. As a result, a glass fiber fine powder (average fiber length of less than 0.5 mm) having the surface treated with the silane coupling agent was obtained. As the silane coupling agent, an aqueous solution obtained by melting aminosilane into ion-exchanged water was used. At this time, the concentration and the impregnated amount of the aminosilane aqueous solution were adjusted so that a solid content of aminosilane to be deposited per 1 $m^2$ of the surface area of the glass fiber would be 10 mg.
The glass fiber fine particle was mixed in the same electrolyte dispersion liquid as the example 1 so that the ratio of the glass fiber fine powder to the electrolyte would be 12 wt.%. Then, the mixed liquid was stirred for five minutes at a rotation speed of 1.67 rotation/second (100 rpm) by using a paint shaker. Thus, the electrolyte dispersion liquid including the glass fiber fine powder was obtained. This electrolyte dispersion liquid was put into a glass-made petri dish having a bottom surface with good flatness. The liquid was naturally dried for 12 hours or longer, and then was applied to a thermal treatment at 120˚C for one hour. Thereby, the proton conductive membrane was obtained. The concentration of the electrolyte dispersion liquid was set to be the same as the example 1. And the amount of the liquid was adjusted so that the thickness of the electrolyte membrane after the thermal treatment would be 50 $\mu$m.
The following tests were conducted on the proton conductive membranes prepared in the examples 1 to 5 and in the comparative example 1 to 2.

Tensile Strength Measurement

The proton conductive membrane was cut to form a specimen of 20 mm in width and 80 mm in length. The specimen was held by two chucks so that the distance between the two chucks would be 30 mm. The specimen was pulled with a speed of 10 mm/minute, and a load (N) at rupture was measured. This value was divided by measured values of a sample thickness and a sample width so that a tensile strength (MPa) was evaluated. The sample thickness was measured with a micrometer.

Area Swelling Rate Measurement

The proton conductive membrane was cut to form a specimen of approximately 40 mm by 70 mm. The dimension (horizontal and vertical sizes) of the specimen in a dried state was measured. The specimen was immersed in ion-exchanged water for 12 hours or longer, and the dimension (horizontal and vertical sizes) in a wet state was measured once again. Based on the measurement results, the area of the specimen in a dried state and that in a wet state were calculated, and these areas were substituted into the following [Eq. 2] so as to evaluate an area swelling rate. The area swelling rate is a rate of area increase caused due to swelling of the proton conductive membrane on exposure to water.

$$[\text{Eq. 2}] \quad \text{Area swelling rate (\%)} = (\text{area in a wet state/area in a dried state} - 1) \times 100$$

[Proton Conductive Level Evaluation]

The proton conductive membrane was moistened, and by using an impedance analyzer, a proton conductive level was measured using a dc two-probe method.
The results of the above test are shown in Table 3.

[Table 3]

|  | Tensile strength [MPa] | Area swelling rate [%] | Proton conductivity [S/m] |
|---|---|---|---|
| Ex. 1 | 9 | 12 | 12 |
| Ex. 2 | 17 | 0 | 11 |
| Ex. 3 | 12 | 0 | 10 |
| Ex. 4 | 20 | 0 | 10 |
| Ex. 5 | 8 | 2 | 11 |
| Comparative Ex. 1 | 6 | 21 | 13 |
| Comparative Ex.2 | 7 | 18 | 12 |

As can be seen clearly from the above-described examples and comparative examples, the electrolyte membranes of examples 1 to 5 of the present invention showed larger tensile strength, compared to the electrolyte membranes of the comparative examples 1, 2. In addition, the area swelling rates of the examples 1 to 5 are greatly reduced compared to the comparative examples. In particular, a restraining effect of dimensional changes in the examples 2 to 5, in which the binder liquid (inorganic binder) was used, was significant.
The tensile strength and the swelling rate of the comparative example 2 including approximately 12 wt.% of the glass fiber fine powder to which the aminosilane treatment was applied were not so different from those of the comparative example 1 that contained no glass fiber. In addition, the tensile strength and swelling rate of the comparative example 2 was greatly inferior to the example 2 that contained approximately 12 wt.% of the glass fiber nonwoven fabric to which the aminosilane treatment was applied. These results indicate that the proton conductive membrane using the glass fiber fine powder having extremely short length showed the smaller reinforcing effect.
In addition, all the proton conductive membranes obtained by using the examples 1 to 5 and the comparative examples 1 to 2 showed good proton conductivity.

Example 6

A glass fiber (C-glass composition) of approximately 0.4 $\mu$m in average fiber diameter and a glass fiber (C-glass composition) of approximately 0.9 $\mu$m in average fiber diameter were gathered so that the weight ratio would be 4:1. The glass fibers and colloidal silica were put into water that has been adjusted to pH 2.5 with sulfuric acid. Thereby, a mixed liquid thereof was obtained. The amount of the colloidal silica to be added was set to approximately 40% of the total weight of the two kinds of glass fibers. Next, the above-described mixed liquid was put into a pulper, and was stirred at 50 rotation/second (3000 rpm) for approximately 10 minutes. Thereby, a slurry was obtained.
This slurry was diluted with water that has been adjusted to pH 2.5 with sulfuric acid, and stirred. Subsequently, the slurry was passed through a net of which mesh size was 0.5 mm or less. Then, through drying of the glass fiber remaining on the net, the reinforcing material (50 μm in thickness) of the present invention made of the glass fiber including silica was obtained. The ratio of the binder (silica) to the reinforcing material was approximately 29 wt.%.

Comparative Example

A nonwoven fabric (50 μm in thickness) made solely of the C-glass fiber was obtained using the same method as the example 6 except that colloidal silica was not added thereto.

Tensile strengths of the reinforcing materials (nonwoven fabric) of the examples 1, 6 and the comparative example 3 were measured. As a result, the tensile strength of the reinforcing material of the example 1 was approximately 2.2 MPa. The tensile strength of the reinforcing material of the example 6 was approximately 1.9 MPa. The tensile strength of the reinforcing material of the comparative example 3 was approximately 0.4 MPa.

As described above, the reinforcing material and the proton conductive membrane excellent in tensile strength and dimensional stability were obtained by reinforcing, with the binder, the nonwoven fabric configured of the glass fiber having the C-glass composition.

Industrial Applicability

The reinforcing material of the present invention is applicable to reinforcement of the proton conductive membrane of a fuel cell. The proton conductive membrane using the reinforcing material is applicable to the fuel cell.

**Claims**

1. A reinforcing material for proton conductive membrane, comprising a nonwoven fabric including, as essential components thereof, glass fibers having a C-glass composition and a binder for strengthening bonding between the glass fibers, wherein
an average fiber diameter of the glass fibers is in a range of 0.1 μm to 20 μm, and
an average fiber length of the glass fibers is in a range of 0.5 mm to 20 mm.

2. The reinforcing material according to claim 1, wherein the binder includes an inorganic binder.

3. The reinforcing material according to claim 2, wherein an amount of the inorganic binder is in a range of 0.5 % to 10 % of a weight of the glass fibers.

4. The reinforcing material according to claim 2, wherein the inorganic binder is silica.

5. The reinforcing material according to claim 1, wherein the binder includes a binder formed by using a liquid including a component of the binder.

6. The reinforcing material according to claim 1, wherein the binder includes a fibrous binder, and an amount of the fibrous binder is in a range of 1% to 40% of a weight of the glass fibers.

7. The reinforcing material according to claim 1, wherein an area density of the nonwoven fabric is in a range of 2 to 50 g/m$^2$.

8. The reinforcing material according to claim 1, wherein a thickness of the nonwoven fabric is 400 μm or less.

9. The reinforcing material according to claim 1, wherein a porosity of the nonwoven fabric is in a range of 60 to 98 vol.%.

10. The reinforcing material according to claim 1, wherein a surface of the nonwoven fabric is treated with a silane coupling agent.

11. The reinforcing material according to claim 10, wherein an amount of the silane coupling agent deposited to the nonwoven fabric is in a range of 0.5 mg to 200 mg per 1 m$^2$ of a surface area of the glass fibers.

12. A proton conductive membrane comprising a proton conductive substance and a reinforcing material, wherein the reinforcing material is a reinforcing material according to claim 1.

13. A fuel cell comprising a proton conductive membrane, wherein the proton conductive membrane includes a proton conductive substance and a reinforcing material, and the reinforcing material is a reinforcing material according to claim 1.

Fig. 1

Fig. 2

1

10          20

Fig. 3

## INTERNATIONAL SEARCH REPORT

| | International application No. |
|---|---|
| | PCT/JP2005/003649 |

**A. CLASSIFICATION OF SUBJECT MATTER**
Int.Cl$^7$  H01M8/02, D04H1/42, 1/64, D06M13/513, H01B1/06, H01M8/10

According to International Patent Classification (IPC) or to both national classification and IPC

**B.  FIELDS SEARCHED**

Minimum documentation searched (classification system followed by classification symbols)
Int.Cl$^7$  H01M8/02, D04H1/42, 1/64, D06M13/513, H01B1/06, H01M8/10

Documentation searched other than minimum documentation to the extent that such documents are included in the fields searched
Jitsuyo Shinan Koho        1922-1996    Jitsuyo Shinan Toroku Koho    1996-2005
Kokai Jitsuyo Shinan Koho   1971-2005    Toroku Jitsuyo Shinan Koho     1994-2005

Electronic data base consulted during the international search (name of data base and, where practicable, search terms used)

**C.  DOCUMENTS CONSIDERED TO BE RELEVANT**

| Category* | Citation of document, with indication, where appropriate, of the relevant passages | Relevant to claim No. |
|---|---|---|
| X<br>Y<br>A | JP 2004-47450 A  (Nippon Sheet Glass Co., Ltd.),<br>12 February, 2004 (12.02.04),<br>Par. Nos. [0017] to [0018], [0025] to [0033]<br>(Family: none) | 1,7-9,12-13<br>2-5,10-11<br>6 |
| Y | WO 00/24075 A1  (JOHNSON MATTHEY PLC.),<br>27 April, 2000 (27.04.00),<br>Claims<br>& JP 2002-528868 A        & EP 1133807 B1<br>& US 2004/0208993 A1 | 2-5 |
| Y | JP 11-204121 A (Aisin Seiki Co., Ltd.),<br>30 July, 1999 (30.07.99),<br>Claims<br>& DE 19901722 A1        & US 6224994 B1 | 10-11 |

| ☒  Further documents are listed in the continuation of Box C. | ☐  See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>24 May, 2005 (24.05.05) | Date of mailing of the international search report<br>07 June, 2005 (07.06.05) |
|---|---|
| Name and mailing address of the ISA/<br>Japanese Patent Office | Authorized officer |
| Facsimile No. | Telephone No. |

Form PCT/ISA/210 (second sheet) (January 2004)

# EP 1 727 225 A1

**INTERNATIONAL SEARCH REPORT**

International application No.

PCT/JP2005/003649

C (Continuation). DOCUMENTS CONSIDERED TO BE RELEVANT

| Category* | Citation of document, with indication, where appropriate, of the relevant passages | Relevant to claim No. |
|---|---|---|
| Y | WO 03/041091 A1 (Sekisui Chemical Co., Ltd.), 15 May, 2003 (15.05.03), Claims & CA 2433320 A1 & EP 1441365 A1 & US 2004/0062970 A1 | 10-11 |
| A | EP 0875524 A2 (JOHNSON MATTHEY PLC.), 04 November, 1998 (04.11.98), & JP 10-312815 A & US 6042958 A | 1-13 |
| P,X | JP 2004-319421 A (Nippon Sheet Glass Co., Ltd.), 11 November, 2004 (11.11.04), Full text (Family: none) | 1-9,12-13 |

Form PCT/ISA/210 (continuation of second sheet) (January 2004)

16

**EP 1 727 225 A1**

**Patent documents cited in the description**

- JP 2001345111 A
- JP 2003142122 A
- JP 11204121 A
- JP 2001307545 A
- JP 10312815 A